# EUROPÄISCHE PATENTSCHRIFT

(11) **EP 3 383 670 B1**
(45) Veröffentlichungstag und Bekanntmachung des Hinweises auf die Patenterteilung: **27.11.2019**
(21) Anmeldenummer: 16763533.3
(22) Anmeldetag: 13.09.2016
(51) Int. Cl.: B60C 11/03, B60C 11/11, B60C 11/12

(54) **FAHRZEUGLUFTREIFEN**
PNEUMATIC VEHICLE TYRES
PNEUMATIQUE DE VÉHICULE

(30) Priorität: 04.12.2015 DE 102015224288
(43) Veröffentlichungstag der Anmeldung: 10.10.2018
(73) Patentinhaber: Continental Reifen Deutschland GmbH, 30165 Hannover (DE)
(72) Erfinder: BROCKMANN, Jürgen, 30171 Hannover (DE); DIENSTHUBER, Franz, 60528 Frankfurt (DE); SENG, Matthias, 30453 Hannover (DE)
(74) Vertreter: Finger, Karsten
(86) Internationale Anmeldenummer: PCT/EP2016/071496
(87) Internationale Veröffentlichungsnummer: WO 2017/092898

(56) Entgegenhaltungen:
- EP-A1- 0 609 195
- EP-A1- 1 533 140
- EP-A2- 0 729 854
- JP-A- 2003 080 907

## Beschreibung

Die Erfindung betrifft einen Fahrzeugluftreifen, insbesondere für den Einsatz unter winterlichen Fahrbedingungen, mit einem laufrichtungsgebundenen Laufstreifen, welcher durch Diagonalrillen, die über die Laufstreifenbreite im Wesentlichen V-förmig verlaufen und die Hauptrillen des Laufstreifens sind, und durch einander benachbarte Diagonalrillen miteinander verbindende Umfangsrillen in schulterseitige Profilblöcke und in mittlere Profilblöcke gegliedert ist, wobei sich die Umfangsrillen unter einem Winkel von 3° bis 15° zur Umfangsrichtung und gegenüber der Umfangsrichtung gegensinnig zu den V-förmig verlaufenden Diagonalrillen erstrecken.

Ein derartiger Fahrzeugluftreifen ist beispielsweise aus der EP 2 222 481 B1 bekannt. Die Umfangsrillen verbreitern sich gegen die vorgesehene Abrollrichtung des Reifens jeweils kontinuierlich über ihren Verlauf zwischen einander benachbarten Diagonalrillen, wobei die schmalen Enden der Umfangsrillen eine Breite von 1 mm bis 2 mm, die breiten Enden eine Breite von 3 mm bis 5 mm aufweisen.

Aus der EP 0 729 854 A2 ist ein Fahrzeugluftreifen mit einem Laufstreifen mit paarweise angeordneten mittleren Blockreihen und mit schulterseitigen Blockreihen bekannt. Die nebeneinander liegenden Profilblöcke in den mittleren Blockreihen sind jeweils durch eine Umfangsrille voneinander getrennt, welche sich aus einem schmalen Rillenabschnitt, einem gegenüber diesem breiter ausgeführten breiten Rillenabschnitt und einem zwischen diesen verlaufenden kurzen Verbindungsabschnitt zusammensetzen. Ein derartiger Fahrzeugluftreifen soll gute Fahreigenschaften auf schneebedeckten Fahrbahnen aufweisen.

Es ist üblich, zur Erhöhung der Steifigkeit von Laufstreifen der eingangs genannten Art die zwischen den Profilblöcken verlaufenden Umfangsrillen entweder im Bereich der Rillenenden oder über ihre gesamte Länge weniger tief auszuführen als die Diagonalrillen, in welche sie einmünden. Insbesondere bei Geradeausfahrt ist dadurch das für eine Wasserableitung zu Verfügung stehende Rillenvolumen reduziert.

Die Dokumente JP2003080907-A, EP1533140-A1 und EP0609195-A1 zeigen Fahrzeugreifen, die ebenfalls relevant für die Erfindung sind.

Der Erfindung liegt die Aufgabe zugrunde, bei einem Fahrzeugluftreifen der eingangs genannten Art die Umfangsrillen derart zu gestalten, dass sie ein verbessertes Wasserableitvermögen besitzen und dass, insbesondere beim Auftreten von Querkräften, die Steifigkeit des Laufstreifens zur optimalen Übertragung von Lenkkräften erhöht ist.

Gelöst wird die gestellte Aufgabe erfindungsgemäß dadurch, dass die Umfangsrillen in axialer Richtung gegeneinander versetzte, parallel zueinander verlaufende Rillenabschnitte und einen diese verbindenden, gegenüber den axial gegeneinander versetzten Rillenabschnitten kurzen Verbindungsabschnitt aufweisen, wobei jeweils der bei Vorwärtsfahrt bei den auslaufenden Profilblockkanten in eine Diagonalrille einmündende Rillenabschnitt breiter ist als der bei den einlaufenden Profilblockkanten in eine Diagonalrille mündende Rillenabschnitt, wobei der schmale Rillenabschnitt derart breit ist, dass beim Auftreten von Querkräften bestimmter Größe ein gegenseitiges Abstützen der ihn begrenzenden Profilblöcke unter Schließen des Rillenabschnittes ermöglicht ist.

Bei Geradeauslauf und wenn keine nennenswerten Querkräfte wirken steht das volle Rillenvolumen der Umfangsrillen zur Ableitung von Wasser aus der Bodenaufstandsfläche in die Diagonalrillen zur Verfügung. Beim Auftreten von Querkräften infolge von Lenkkräften verformt sich der Laufstreifen, die betreffenden Profilblöcke stützen sich durch Verschließen des schmalen Rillenabschnittes aneinander ab, wodurch die Steifigkeit erhöht wird und eine optimale Übertragung von Querkräften gewährleistet ist. Der breitere Rillenabschnitt steht dabei weiterhin für eine gute Wasserableitung zur Verfügung. Ein weiterer positiver Effekt der erfindungsgemäßen Umfangsrillengeometrie besteht darin, dass die schmälere Rillenöffnung im Bereich der einlaufenden Profilblockkanten dafür sorgt, dass in diesem Bereich bei Nässe das Wasser nur gering verwirbelt wird, sodass die Wasserableitung insgesamt verbessert ist.

Der breitere Rillenabschnitt kann für eine besonders gute Wasserableitung sorgen, wenn er gemäß der Erfindung eine insbesondere konstante Breite von 2,5 mm bis 5,0 mm aufweist.

Besonders bevorzugt ist ferner eine Ausführung, bei der der schmale Rillenabschnitt eine ebenfalls vorzugsweise konstante Breite aufweist, die um mindestens 1 mm kleiner ist als die Breite des breiten Rillenabschnittes. Dabei sollte vorteilhafterweise der schmale Rillenabschnitt eine Mindestbreite von 1,0 mm aufweisen, seine maximale Breite beträgt insbesondere 2,5 mm.

Für eine gute Wasserableitung ist es ferner besonders günstig, wenn der schmale Rillenabschnitt gegenüber dem breiten Rillenabschnitt Richtung Laufstreifenaußenseite versetzt ist, wobei vorzugsweise der gegenseitige axiale Versatz der Rillenabschnitte an der die Umfangsrille laufstreifenaußenseitig begrenzenden Profilkante 1,0 mm bis 2,5 mm beträgt.

Bevorzugt ist ferner eine Ausführung, bei der der breite Rillenabschnitt über 50 % bis 70 % der Erstreckungslänge der Umfangsrille verläuft, wobei diese Erstreckungslänge an der die Umfangsrille laufstreifenaußenseitig begrenzenden Profilblockkante ermittelt wird. Der schmale Rillenabschnitt verläuft bevorzugter Weise über 25 % bis 35 % der Erstreckungslänge. Auch diese Maßnahmen begünstigen eine gute Wasserableitung in die Diagonalrillen.

In diesem Zusammenhang ist es auch vorteilhaft, wenn die Umfangsrillen eine Tiefe aufweisen, welche der Tiefe der Diagonalrillen entspricht oder um bis zu 2,0 mm geringer ist als die Tiefe der Diagonalrillen.

Weitere Merkmale, Vorteile und Einzelheiten der Erfindung werden nun anhand der Zeichnung, die ein Ausführungsbeispiel darstellt, näher beschrieben. Dabei zeigen
Fig. 1 eine Draufsicht auf eine Teilabwicklung eines Laufstreifens eines Fahrzeugluftreifens,
Fig. 2 einen vergrößerten Ausschnitt mit einer Umfangsrille
Fig. 3 eine Schnittdarstellung entlang der Linie III-III der Fig. 1,
Fig. 4 eine Schnittdarstellung entlang der Linie IV-IV der Fig. 1 und
Fig. 5 eine Schnittdarstellung entlang der Linie V-V der Fig. 2.

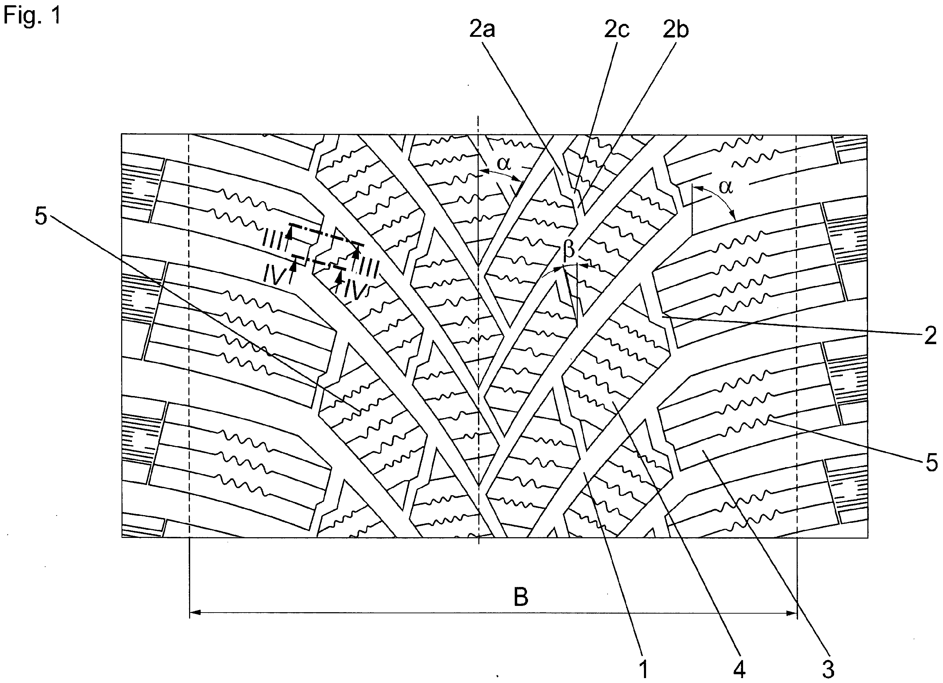

Der in Fig. 1 gezeigte Laufstreifen ist für Winterreifen oder Ganzjahresreifen von Personenkraftwagen, Vans und dergleichen vorgesehen und laufrichtungsgebunden ausgeführt. Mit B ist die Bodenaufstandsflächenbreite bezeichnet, jene Breite des Laufstreifens, über welche der Reifen beim Abrollen mit dem Untergrund in Kontakt tritt. Der bodenberührende Teil des Laufstreifen entspricht dem statisch ermittelten Footprint gemäß E.T.R.T.O.-Standards (Last bei 70 % der Tragfähigkeit bei einem Innendruck von 2,5 bar, Innendruck 85 % von 2,5 bar).

Beim dargestellten Ausführungsbeispiel ist der Laufstreifen über seine Breite B durch im Wesentlichen V-förmig verlaufende Diagonalrillen 1 und durch zwischen diesen in Umfangsrichtung verlaufende Umfangsrillen 2 in schulterseitige Profilblöcke 3 und in im mittleren Bereich des Laufstreifens angeordnete mittige Profilblöcke 4 gegliedert. Die Diagonalrillen 1 sind die Hauptrillen des Laufstreifens und verlaufen im zentralen Bereich des Laufstreifens unter einem Winkel α ≤ 60°, insbesondere von 25° bis 40°, zur Umfangsrichtung, in Richtung zu den Laufstreifenrändern wird dieser Winkel α zunehmend größer, sodass die Diagonalrillen 1 zwischen den schulterseitigen Profilblöcken 3 unter einem Winkel α von 65° bis 90° zur Umfangsrichtung verlaufen. Die in der einen Laufstreifenhälfte verlaufenden Diagonalrillen 1 sind gegenüber jenen, die in der anderen Laufstreifenhälfte verlaufen, in Umfangsrichtung etwas versetzt. Im zentralen Bereich des Laufstreifens münden die Diagonalrillen 1 ineinander. In bekannter Weise weisen ferner die Diagonalrillen 1 im Reifenzentrum eine geringere Breite auf als schulterseitig, wobei ihre Breite vom zentralen Bereich Richtung Laufstreifenränder kontinuierlich größer wird. In jeder Laufstreifenhälfte sind zwischen den in Umfangsrichtung benachbarten Diagonalrillen 1 jeweils zwei der erwähnten Umfangsrillen 2 und somit jeweils zwei Profilblöcke 4 vorgesehen.

Durch den Verlauf der Diagonalrillen 1 ist der Laufstreifen laufrichtungsgebunden ausgeführt und ist daher derart am Fahrzeug zu montieren, dass die laufstreifeninnenseitigen Enden der Diagonalrillen 1 beim Abrollen des Reifens bei Vorwärtsfahrt zuerst in den Untergrund eintreten. In Fig. 1 ist ferner zu erkennen, dass die Profilstrukturen, nämlich die Profilblöcke 3, 4 sowie die Diagonalrillen 1, wie es üblich ist, nach einem Verfahren der Pitchlängenvariation geräuschoptimiert und daher mit unterschiedlichen Umfangserstreckungen bzw. Umfangslängen ausgeführt sind.

Sowohl in den schulterseitigen Profilblöcken 3 als auch in den mittigen Profilblöcken 4 ist jeweils eine Anzahl von Einschnitten 5 ausgebildet, wobei sich die Einschnitte 5 in den schulterseitigen Profilblöcken 3 im Wesentlichen parallel zu den zwischen diesen Profilblöcken 3 verlaufenden Abschnitten der Diagonalrillen 1 erstrecken. Die in den mittigen Profilblöcken 4 ausgebildeten Einschnitte 5 erstrecken sich im Wesentlichen in axialer Richtung, daher unter Winkeln ≥ 45° zur Umfangsrichtung. Die Einschnitte 5 weisen in bekannter Weise eine Breite von 0,4 mm bis 0,6 mm auf, ihre Tiefe entspricht höchstens der maximalen Profiltiefe, welche bei Reifen für Personenkraftwagen üblicherweise 6 mm bis 8,5 mm beträgt.

Die Umfangsrillen 2 verlaufen jeweils zwischen einem schulterseitigen Profilblock 3 und einem mittigen Profilblock 4 sowie zwischen den beiden mittigen Profilblöcken 4. Jede Umfangsrille 2 setzt sich aus drei Abschnitten zusammen, einem breiten Rillenabschnitt 2a, welcher in eine Diagonalrille 1 einmündet, einem gegenüber diesem in axialer Richtung und Richtung zur Laufstreifenaußenseite geringfügig versetzten schmalen Rillenabschnitt 2b, welcher ebenfalls in eine Diagonalrille 1 einmündet, und einem diese Rillenabschnitte 2a, 2b verbindenden Verbindungsabschnitt 2c zusammen. Dabei münden die schmalen Rillenabschnitte 2b jeweils bei den bei Vorwärtsfahrt ein- bzw. auflaufenden Profilblockkanten in die Diagonalrillen 1. Die beiden Rillenabschnitte 2a, 2b verlaufen zumindest im Wesentlichen parallel zueinander und geradlinig, der Rillenabschnitt 2a über 50 % bis 70 % der Erstreckungslänge 1 der Umfangsrille 2, der Rillenabschnitt 2b über 25 % bis 35 % der Erstreckungslänge 1. Die Erstreckungslänge 1 wird an der die Umfangsrille 2 laufstreifenaußenseitig begrenzenden Blockkante eines Profilblockes 3 oder eines Profilblockes 4 parallel zum Verlauf der Rillenabschnitte 2a, 2b ermittelt. Die Umfangsrillen 2 sind ferner gegenüber der Umfangsrichtung des Laufstreifens und gegensinnig zu den Diagonalrillen 1 geneigt, der Neigungswinkel β gegenüber der Umfangsrichtung beträgt 3° bis 15°.

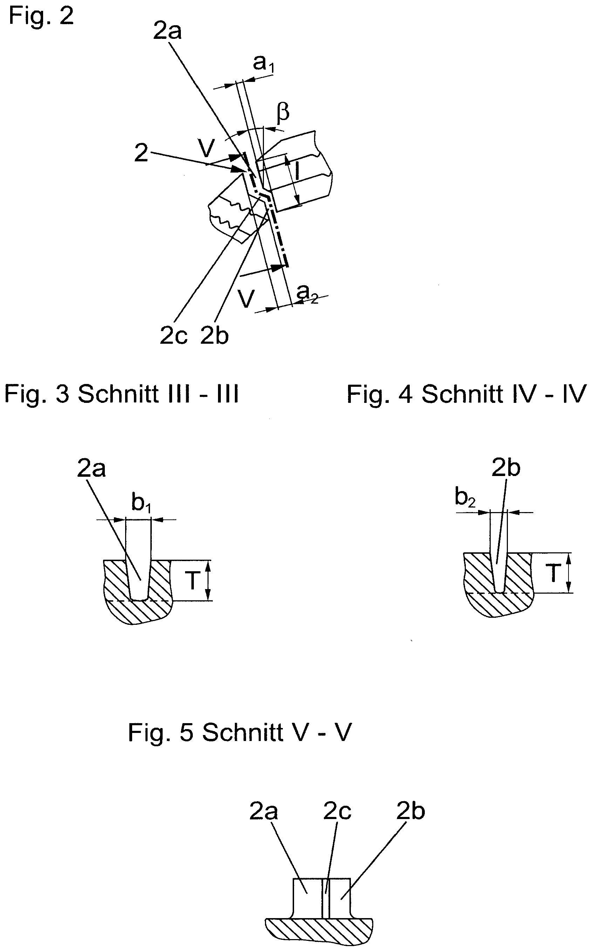

Wie die Figuren 3 und 4 zeigen weisen die Rillenabschnitte 2a und 2b im Wesentlichen U-förmige Querschnitte auf, wobei die Rillenflanken gegenüber der radialen Richtung vorzugsweise leicht geneigt verlaufen, derart, dass die Breite der Rillenabschnitte 2a, 2b Richtung Laufstreifenaußenfläche etwas größer wird. Die Rillenabschnitte 2a, 2b und 2c besitzen gleiche Tiefen, die vorzugsweise der Tiefe T der Diagonalrillen 1 entsprechen. Die Rillenabschnitte 2a, 2b sowie ihr Verbindungsabschnitt 2c können jedoch auch eine um bis zu 2 mm geringere Tiefe aufweisen als die Tiefe T der Diagonalrillen 1.

Die Rillenabschnitte 2a, 2b weisen jeweils eine über ihre Erstreckung vorzugsweise konstante Breite auf, die Breite b₁ des breiten Rillenabschnittes 2a an der Laufstreifenaußenfläche beträgt 2,5 mm bis 5,0 mm, die Breite b₂ des schmalen Rillenabschnittes 2b an der Laufstreifenaußenfläche ist um mindestens 1 mm kleiner als die Breite b₁ und beträgt mindestens 1,0 mm und bis zu 3,0 mm. Der gegenseitige axiale Versatz der Rillenabschnitte 2a, 2b ist, bedingt durch die unterschiedlichen Breiten b₁, b₂ der beiden Rillenabschnitte 2a, 2b, an den weiter laufstreifenaußenseitig verlaufenden Begrenzungskanten der Umfangsrillen 2 geringer als an den gegenüberliegenden Kanten. Laufstreifenaußenseitig beträgt der Versatz a₁ 1,0 mm bis 2,5 mm, laufstreifeninnenseitig ist der Versatz a₂ um mindestens 1 mm größer.

Dadurch dass die schmalen Rillenabschnitte 2b jeweils bei den ein- bzw. auflaufenden Profilblockkanten positioniert sind und die breiten Rillenabschnitte 2a an den aus- bzw. ablaufenden Kanten wird bei Nässe wirkungsvoll das zu verdrängende Wasser durch den breiten Rillenabschnitt 2a in die Diagonalrillen 1 geleitet und aus der Aufstandsfläche abgeleitet. Beim Auftreten von Querkräften können sich die Profilblöcke 3, 4 im Bereich der eine Engstelle bildenden Rillenabschnitte 2b unter Schließen der Rillenabschnitte 2b aneinander abstützen, sodass mehr Kräfte übertragen werden kann. Der breitere Rillenabschnitt 2a bleibt dabei offen, sodass nach wie vor eine gute Wasserableitung über den breiteren Rillenabschnitt 2a gewährleistet ist.

### Bezugsziffernliste

- 1 ......................: Diagonalrille
- 2 ......................: Umfangsrille
- 2a, 2b, 2c .........: Rillenabschnitt
- 3 ......................: schulterseitiger Profilblock
- 4 ......................: mittiger Profilblock
- 5 ......................: Einschnitt
- a₁,a₂ .................: Versatz
- B .....................: Laufstreifenbreite
- b₁,b₂ .................: Breite
- 1.......................: Erstreckungslänge
- T......................: Tiefe
- α, β ..................: Winkel

## Patentansprüche

1. Fahrzeugluftreifen, insbesondere für den Einsatz unter winterlichen Fahrbedingungen, mit einem laufrichtungsgebundenen Laufstreifen, welcher durch Diagonalrillen (1), die über die Laufstreifenbreite im Wesentlichen V-förmig verlaufen und die Hauptrillen des Laufstreifens sind, und durch einander benachbarte Diagonalrillen (1) miteinander verbindende Umfangsrillen (2) in schulterseitige Profilblöcke (3) und in mittlere Profilblöcke (4) gegliedert ist, wobei sich die Umfangsrillen (2) unter einem Winkel von 3° bis 15° zur Umfangsrichtung und gegenüber der Umfangsrichtung gegensinnig zu den V-förmig verlaufenden Diagonalrillen (1) erstrecken,
**dadurch gekennzeichnet,**
**dass** die Umfangsrillen (2) in axialer Richtung gegeneinander versetzte, parallel zueinander verlaufende Rillenabschnitte (2a, 2b) und einen diese verbindenden, gegenüber den axial gegeneinander versetzten Rillenabschnitten (2a, 2b) kurzen Verbindungsabschnitt (2c) aufweisen, wobei jeweils der bei Vorwärtsfahrt bei den uslaufenden Profilblockkanten in eine Diagonalrille (1) einmündende Rillenabschnitt (2a) breiter ist, als der bei den einlaufenden Profilblockkanten in eine Diagonalrille (1) mündende Rillenabschnitt (2b), wobei der schmale Rillenabschnitt (2b) derart breit ist, dass beim Auftreten von Querkräften bestimmter Größe ein gegenseitiges Abstützen der ihn begrenzenden Profilblöcke unter Schließen des Rillenabschnittes (2b) ermöglicht ist.

2. Fahrzeugluftreifen nach Anspruch 1, **dadurch gekennzeichnet, dass** der breite Rillenabschnitt (2a) eine vorzugsweise konstante Breite (b₁) von 2,5 mm bis 5,0 mm aufweist.

3. Fahrzeugluftreifen nach Anspruch 1 oder 2, **dadurch gekennzeichnet, dass** der schmale Rillenabschnitt (2b) eine vorzugsweise konstante Breite (b₁) aufweist, die um mindestens 1 mm kleiner ist als die Breite (b₁) des breiten Rillenabschnittes (2a).

4. Fahrzeugluftreifen nach einem der Ansprüche 1 bis 3, **dadurch gekennzeichnet, dass** der schmale Rillenabschnitt (2b) eine Mindestbreite von 1,0 mm aufweist.

5. Fahrzeugluftreifen nach einem der Ansprüche 1 bis 4, **dadurch gekennzeichnet, dass** der schmale Rillenabschnitt (2b) gegenüber dem breiten Rillenabschnitt (2a) Richtung Laufstreifenaußenseite versetzt ist.

6. Fahrzeugluftreifen nach einem der Ansprüche 1 bis 5, **dadurch gekennzeichnet, dass** der gegenseitige axiale Versatz (a₁) der Rillenabschnitte (2a, 2b) an der die Umfangsrille (2) laufstreifenaußenseitig begrenzenden Profilblockkante 1,0 mm bis 2,5 mm beträgt.

7. Fahrzeugluftreifen nach einem der Ansprüche 1 bis 6, **dadurch gekennzeichnet, dass** der breite Rillenabschnitt (2a) über 50 % bis 70 % der Erstreckungslänge (1) der Umfangsrille (2) verläuft, wobei die Erstreckungslänge (1) an der die Umfangsrille (2) laufstreifenaußenseitig begrenzenden Profilblockkante ermittelt wird.

8. Fahrzeugluftreifen nach einem der Ansprüche 1 bis 6, **dadurch gekennzeichnet, dass** der schmale Rillenabschnitt (2b) über 25 % bis 35 % der Erstreckungslänge (1) verläuft, wobei die Erstreckungslänge (1) an der die Umfangsrille (2) laufstreifenaußenseitig begrenzenden Profilblockkante ermittelt wird.

9. Fahrzeugluftreifen nach einem der Ansprüche 1 bis 8, **dadurch gekennzeichnet, dass** die Umfangsrillen (2) eine Tiefe aufweisen, welche der Tiefe (T) der Diagonalrillen (1) entspricht.

10. Fahrzeugluftreifen nach einem der Ansprüche 1 bis 8, **dadurch gekennzeichnet, dass** die Umfangsrillen (2) eine Tiefe aufweisen, die bis zu 2,0 mm geringer ist als die Tiefe (T) der Diagonalrillen (1).

## Claims

1. Vehicle pneumatic tyre, in particular for use under winter driving conditions, having a directional tread which is divided into shoulder-side profile blocks (3) and central profile blocks (4) by diagonal grooves (1), which extend substantially in a V shape over the tread width and are the main grooves of the tread, and by circumferential grooves (2) connecting mutually adjacent diagonal grooves (1) to one another, the circumferential grooves (2) extending at an angle of 3° to 15° to the circumferential direction and in the opposite direction, with respect to the circumferential direction, to the diagonal grooves (1) extending in the V shape,
**characterized in that**
the circumferential grooves (2) have groove sections (2a, 2b) extending parallel to one another and offset in the axial direction relative to one another, and a connecting section (2c) connecting the latter and short as compared with the groove sections (2a, 2b) that are offset axially relative to one another, wherein in each case the groove section (2a) opening into a diagonal groove (1) at the outgoing profile block edges during forward travel is wider than the groove section (2b) opening into a diagonal groove (1) at the ingoing profile block edges, wherein the narrow groove section (2b) is of such a width that when transverse forces of specific magnitude occur, mutual support of the profile blocks bordering the same is made possible by closing the groove section (2b).

2. Vehicle pneumatic tyre according to Claim 1, **characterized in that** the wide groove section (2a) has a preferably constant width (b₁) of 2.5 mm to 5.0 mm.

3. Vehicle pneumatic tyre according to Claim 1 or 2, **characterized in that** the narrow groove section (2b) has a preferably constant width (b₁) which is smaller by at least 1 mm than the width (b₁) of the wide groove section (2a).

4. Vehicle pneumatic tyre according to one of Claims 1 to 3, **characterized in that** the narrow groove section (2b) has a minimum width of 1.0 mm.

5. Vehicle pneumatic tyre according to one of Claims 1 to 4, **characterized in that** the narrow groove section (2b) is offset relative to the wide groove section (2a) in the direction of the tread outer side.

6. Vehicle pneumatic tyre according to one of Claims 1 to 5, **characterized in that** the mutual axial offset (a₁) of the groove sections (2a, 2b) at the profile block edge delimiting the circumferential groove (2) on the tread outer side is 1.0 mm to 2.5 mm.

7. Vehicle pneumatic tyre according to one of Claims 1 to 6, **characterized in that** the wide groove section (2a) extends over 50% to 70% of the extension length (1) of the circumferential groove (2), wherein the extension length (1) is determined at the profile block edge delimiting the circumferential groove (2) on the tread outer side.

8. Vehicle pneumatic tyre according to one of Claims 1 to 6, **characterized in that** the narrow groove section (2b) extends over 25% to 35% of the extension length (1), wherein the extension length (1) is determined at the profile block edge delimiting the circumferential groove (2) on the tread outer side.

9. Vehicle pneumatic tyre according to one of Claims 1 to 8, **characterized in that** the circumferential grooves (2) have a depth which corresponds to the depth (T) of the diagonal grooves (1).

10. Vehicle pneumatic tyre according to one of Claims 1 to 8, **characterized in that** the circumferential grooves (2) have a depth which is up to 2.0 mm less than the depth (T) of the diagonal grooves (1) .

## Revendications

1. Pneumatique de véhicule, destiné en particulier à être utilisé dans des conditions de roulement hivernales, comprenant une bande de roulement liée à la direction de roulement qui est divisée par des rainures diagonales (1), qui s'étendent sensiblement en forme de V sur la largeur de la bande de roulement et qui sont les rainures principales de la bande de roulement, et par des rainures circonférentielles (2), qui relient des rainures diagonales adjacentes (1) entre elles, en blocs profilés côté épaulement (3) et en blocs profilés médians (4), les rainures circonférentielles (2) s'étendant suivant un angle de 3° à 15° par rapport à la direction circonférentielle et à l'opposé de la direction circonférentielle dans des sens opposés aux rainures diagonales (1) s'étendant en forme de V,
**caractérisé en ce que**
les rainures circonférentielles (2) comportent des parties de rainure (2a, 2b), s'étendant parallèlement les unes aux autres en étant décalées les unes des autres dans la direction axiale, et une partie de liaison courte (2c) reliant ces parties de rainures par rapport aux parties de rainure (2a, 2b) décalées axialement les unes des autres, la partie de rainure (2a) qui débouche dans une rainure diagonale (1) pendant l'avancement dans le cas des bords de blocs profilés sortant étant plus large que la partie de rainure (2b) qui débouche dans une rainure diagonale (1) dans le cas des bords de blocs profilés entrant, la partie de rainure étroite (2b) étant large de sorte que, lorsque des forces transversales d'une certaine intensité se produisent, un support mutuel des blocs profilés qui la délimite est rendu possible par la fermeture de la partie de rainure (2b).

2. Pneumatique de véhicule selon la revendication 1, **caractérisé en ce que** la partie de rainure large (2a) a une largeur (b₁) de préférence constante de 2,5 mm à 5,0 mm.

3. Pneumatique de véhicule selon la revendication 1 ou 2, **caractérisé en ce que** la partie de rainure étroite (2b) a une largeur (b₁) de préférence constante qui est inférieure d'au moins 1 mm à la largeur (b₁) de la partie de rainure large (2a).

4. Pneumatique de véhicule selon l'une des revendications 1 à 3, **caractérisé en ce que** la partie de rainure étroite (2b) a une largeur minimale de 1,0 mm.

5. Pneumatique de véhicule selon l'une des revendications 1 à 4, **caractérisé en ce que** la partie de rainure étroite (2b) est décalée vers le côté extérieur de la bande de roulement par rapport à la partie de rainure large (2a).

6. Pneumatique de véhicule selon l'une des revendications 1 à 5, **caractérisé en ce que** le décalage axial (a₁) des parties de rainure (2a, 2b) les unes par rapport aux autres au niveau du bord de bloc profilé limitant la rainure circonférentielle (2) du côté extérieur de la bande de roulement est compris entre 1,0 mm et 2,5 mm.

7. Pneumatique de véhicule selon l'une des revendications 1 à 6, **caractérisé en ce que** la partie de rainure large (2a) représente plus de 50 % à 70 % de la longueur d'extension (1) de la rainure circonférentielle (2), la longueur d'extension (1) étant déterminée au niveau du bord de bloc profilé limitant la rainure circonférentielle (2) du côté extérieur de la bande de roulement.

8. Pneumatique de véhicule selon l'une des revendications 1 à 6, **caractérisé en ce que** la partie de rainure étroite (2b) s'étend sur 25 % à 35 % de la longueur d'extension (1), la longueur d'extension (1) étant déterminée au niveau du bord de bloc profilé limitant la rainure circonférentielle (2) du côté extérieur de la bande de roulement.

9. Pneumatique de véhicule selon l'une des revendications 1 à 8, **caractérisé en ce que** les rainures circonférentielles (2) ont une profondeur qui correspond à la profondeur (T) des rainures diagonales (1) .

10. Pneumatique de véhicule selon l'une des revendications 1 à 8, **caractérisé en ce que** les rainures circonférentielles (2) ont une profondeur qui peut atteindre 2,0 mm de moins que la profondeur (T) des rainures diagonales (1).
